# EUROPÄISCHE PATENTANMELDUNG

(11) **EP 1 462 558 A1**
(43) Veröffentlichungstag der Anmeldung: **29.09.2004**
(21) Anmeldenummer: 04002028.1
(22) Anmeldetag: 30.01.2004
(51) Int. Cl.: D04H 13/00, B32B 5/04

(54) **Querelastische, mehrschichtige Materialbahnen und Verfahren zur Herstellung derselben**

(30) Priorität: 04.02.2003 DE 10304370
(71) Anmelder: RKW AG Rheinische Kunststoffwerke, 67547 Worms (DE)
(72) Erfinder: Epping, Reinhard, 48599 Gronau (DE)
(74) Vertreter: Zellentin, Wiger, Dipl.-Ing.

(57) **Zusammenfassung**

Die Erfindung betrifft eine querelastische, mehrschichtige Materialbahn bestehend aus einer flexiblen, elastischen Trägerfolie aus einem thermoplastischen Elastomer und aus je einer auf der Ober- und Unterseite der Trägerfolie befestigten Vliesbahn, wobei die Verbindung über Schweißverbindungen in Form gitterartig angeordneter Punktschweißflächen über die Materialbahn bewirkt wird, wobei die Vliesbahnen querelastisch dehnbar sind und plan auf der Trägerfolie aufliegen und Verfahren zu ihrer Herstellung.

## Beschreibung

Die vorliegende Erfindung beschreibt eine neuartige querelastische, mehrschichtige Materialbahn, sowie Verfahren zur ihrer Herstellung, welche vorzugsweise als elastische Abschlussmanschetten bei der Herstellung von Windelhöschen verwendet wird.

Elastische, mehrschichtige Materialbahnen, die als Laminate hergestellt werden sind bereits aus der EPA 0 274 754 und der DE 42 38 541 A1 bekannt. Gemäß dieser Literatur wird eine gummielastische Folie, beispielsweise aus PE-Copolymerisat oder Blockpolymerisat beidseitig mit einer Vliesbahn kaschiert, wodurch der Verbund ein textiles Aussehen und textile haptische Eigenschaften erhält. Die Verbindung wird durch gitterförmig angeordnete Schweißpunkte, welche den ganzen Verbund durchdringen hergestellt, wobei die Schweißpunkte vorzugsweise ringförmig ausgebildet sind, so dass die elastische Folie an diesen Stellen Löcher aufweist, oder eine sehr dünne Restfolie übrig bleibt, durch die Gase, aber keine Flüssigkeiten hindurchtreten. Beim Zusammenführen der Bahnen wird die elastische Folie in Längsrichtung vorgereckt und in diesem Zustand mit den Vliesbahnen verbunden, so dass nach dem Entlasten sich die Folie wieder zusammenzieht und die aufliegenden Vliesbahnen eine leichte Wellen- oder Kreppform bekommen, wodurch sich der textile Eindruck verstärkt. Entsprechende Laminate lassen sich wieder auseinanderziehen bis die Vliesbahnen eine glatte Lage erhalten und einem weiteren Strecken entgegenwirken.

Die DE 42 38 541 A1 sieht zusätzlich vor, dass auch die Vliesbahnen mechanisch gereckt sind und die Streckung von Folie zu Vliesbahn 1 zu Vliesbahn 2 abnimmt. Dadurch wird erreicht, dass beim anschließenden Zusammenziehen des Laminats Ober- und Unterseite unterschiedlich stark wellig wirken und beim Strecken Vliesbahn 1 leicht wellig ist, während Vliesbahn 2 schon gestreckt ist und ein weiteres Dehnen der Bahn verhindert.

Nachteilig an diesen bekannten Laminaten ist es, dass sie einerseits für ihre Herstellung durch das Verstrecken der Bahnen einen erhöhten apparativen Aufwand erfordern und andererseits dadurch, dass das Strecken nur in Längsrichtung möglich ist, die fertige Bahn auch nur in Längsrichtung eine gewisse Elastizität besitzt und für die übliche Anwendung als Abschlussbund in Streifen geschnitten, abgelängt und quer zur Maschinenrichtung eingebracht werden muss.

Aufgabe der vorliegenden Erfindung war es daher ein querelastisches, mehrschichtiges Material zu entwickeln, welches vorzugsweise einfacher Herzustellen und Weiterzuverarbeiten ist als die bisherigen längselastischen Bänder.

Die Lösung der Aufgabe gelingt durch die Merkmale der Haupt- und Nebenansprüche, sie wird durch die Merkmale der Unteransprüche gefördert.

Das erfindungsgemäße Material besteht aus einer elastischen Trägerfolie (Elastomere), welche beidseitig mit einem glatt aufliegenden Vlies kaschiert ist, wobei gitterförmige Schweißpunkte, welche den gesamten Schichtaufbau durchgreifen, die Schichten zusammenhalten. Das zum Verschweißen dienende Material besteht aus einem Teil des Vliesmaterials bzw. der zentralen Folie. Der einzelne Schweißpunkt durchbricht (locht) die zentrale Folie und verbindet obere und untere Vliesbahnen miteinander. Vorzugsweise ist der Schweißpunkt ringförmig ausgebildet, wodurch das Laminat atmungsaktiv ist. Gegebenenfalls ist bekannterweise diese Ringmitte durch eine dünne Folienhaut verschlossen.

Im Gegensatz zu den bekannten mehrschichtigen Materialien wird als Vlies ein spezielles Material verwendet, welches in Querrichtung zur Materialbahn eine bis zu 200 %-ige Dehnfähigkeit besitzt. Unter Verwendung dieser Materialien ist es möglich, ohne Vorreckung von Trägerfolie und Vliesmaterial alle drei Bahnen parallel z. B. in eine Schweißverbindungsvorrichtung gemäß DE 42 38 541 A1 einzubringen, wobei die Bahnen zwischen zwei Walzen durchgeführt werden, die über erhitzte Schweißstacheln die Materialbahn durchgreifen und die zentrale Trägerfolie soweit anschmelzen, dass diese sich punktuell mit den Vliesbahnen verbindet. Durch Verwendung von entsprechenden Schweißstacheln auf beiden Walzen, welche sich jeweils in der Mitte der Trägerfolie treffen, werden Ringschweißpunkte erzeugt, die durch einen dünnen Rest der Folie noch gegen Flüssigkeitsdurchtritt verschlossen sind, jedoch einen Gasdurchtritt weitgehend zulassen.
Alternativ kann auch eine Ultraschallschweißanlage verwendet werden, bei der die zum Verschweißen notwendige Energie über Ultraschallanlagen zugeführt wird.

Die erfindungsgemäß zu verwendenden Vliesmaterialien werden hergestellt, indem man geeignete Polymere, vorzugsweise PP-Homo-Polymere mit einem Schmelzindex MFI 230°/2,16 Kg von 8-12 g pro /10 min., über Spinndüsen extrudiert, wobei durch eine gezielte, verzögerte Anblasung der entstandenen Filamente mittels temperierter Luft eine Faseroberfläche ausgebildet wird, die den folgenden Streck- und Crimpprozess in der Stapelfaserherstellung fördert.

In dem Kardierprozess wird ein Faserflor gebildet, in dem die Menge der querorientierten Fasern zur Menge der längsorientierten Fasern im Verhältnis von 20-40 zu 80-60, vorzugsweise 30 zu 70 verteilt ist. Dieses Verhältnis wird dadurch erreicht, dass eine entsprechend ausgebildete, an sich bekannte Wirrwalze einen hohen Anteil an Fasern aus der Längsorientierung in die Querlage bringt. Der so hergestellte, noch nicht verfestigte Faserflor wird über eine Breitstreckeinrichtung in mehreren Stufen in Querrichtung gestreckt wodurch sich die Fasern zusätzlich in Querrichtung orientieren und anschließend in einer Schweißvorrichtung z. B. einer Kalander-Schweißvorrichtung verfestigt, in dem die Vliesfasern in regelmäßigen Abständen miteinander punktförmig verschweißt werden. Der Pressflächenanteil muss dabei unter 10 %, vorzugsweise bei ca. 8 % der Gesamtfläche liegen, um die Dehnbarkeit nicht zu stark abzusenken. Die Schweißpunkte sind üblicherweise runde oder diamantförmige Punkte mit einem Durchmesser von unter 0,8-0,1 mm, vorzugsweise 0,6-0,4 mm und einem Abstand von 1-3 mm voneinander. Die so erhaltenen Vliese weisen ein Flächengewicht von etwa 15-50 g pro m², vorzugsweise etwa 20-30 g pro m² auf und sind durch die Art und Weise der Herstellung sehr weich und verformbar. Die Reißkraft MD/CD beträgt etwa 4 zu 1, die Dehnung MD/CD 1 zu 2,5 (MD=Machine Direction, CD=Cross Direction).

Alternativ kann anstelle der durchgehenden elastischen Folie auch eine Anzahl paralleler Folienstreifen verwendet werden, die in mehr oder weniger großem Abstand zwischen den Vliesbahnen eingeschweißt werden. Nach Ablängen kann ein so hergestelltes Band mit den Vliesteilen auf eine Unterlage aufgeklebt werden, während die folienhaltigen Teile als elastische Lasche außen vorstehen.

Durch die hohe Querdehnbarkeit dieser Kardenvliese sind diese Produkte besonders zur Herstellung der erfindungsgemäßen querelastischen Laminate geeignet, da sie trotz der faltenfreien Auflage auf der inneren Trägerfolie mit dieser zusammen in Querrichtung gedehnt werden können und somit den damit hergestellten Produkten eine hohe gummielastische Dehnung erlauben.

Die als Träger dienende elastische Folie wird üblicherweise in Stärken von 20-150 µm eingesetzt und besteht vorzugsweise aus thermoplastischen Polyolefinen, Elastomeren und deren Kombinationen. Durch diese Kombinationen können die erforderlichen elastischen Eigenschaften individuell eingestellt werden.

Die maximale Dehnbarkeit der mehrschichtigen Laminate ist durch die Festigkeit der Folie und der verwendeten Vliesbahnen, sowie der durch die gegenseitige Punktverschweißung und die dadurch bewirkte Zerstörung der Folienstruktur begrenzt.

Die erfindungsgemäßen Produkte lassen sich mit ihrer rauen Oberfläche sehr gut gegenüber anderen Kunststoffen oder Papier verkleben, aber auch aufgrund der zusätzlichen Faserverstärkung der Vliese gegen andere Textilien vernähen. Gegebenenfalls können auch Kletthakenmaterialien damit verbunden werden.

Die erfindungsgemäßen Laminate werden in einer Breite hergestellt, die der späteren Verwendung entspricht und von den längslaufenden Bahnen in entsprechender Breite abgelängt. Das Material bietet insoweit Herstellungs- und Verarbeitungstechnische Vorteile gegenüber den bekannten Produkten.

## Patentansprüche

1. Querelastische, mehrschichtige Materialbahn bestehend aus einer flexiblen, elastischen Trägerfolie aus einem thermoplastischen Elastomer und aus je einer auf der Ober- und Unterseite der Trägerfolie befestigten Vliesbahn, wobei die Verbindung über Schweißverbindungen in Form gitterartig angeordneter Punktschweißflächen über die Materialbahn bewirkt wird, **dadurch gekennzeichnet, dass** die Vliesbahnen querelastisch dehnbar sind und plan auf der Trägerfolie aufliegen.

2. Laminat gemäß Anspruch 1, **dadurch gekennzeichnet, dass** die elastische Trägerfolie eine Dicke von 20-150 µm aufweist.

3. Laminat gemäß Anspruch 1 oder 2, **dadurch gekennzeichnet, dass** die Vliesbahnen ein Flächengewicht von 20-50 g pro m² aufweisen.

4. Laminat gemäß Anspruch 1 bis 3, **dadurch gekennzeichnet, dass** die Vliese ein Verhältnis der querorientierten Fasern zur Menge der längsorientierten Fasern im Verhältnis von 20-40 zu 80-60 aufweisen.

5. Laminat gemäß Anspruch 1 bis 4, **dadurch gekennzeichnet, dass** die Vliese durch punktuelles Verschweißen über Schweißpunkte mit einem Durchmesser von unter 0,6 mm und einem Abstand von 1-3 mm verfestigt sind.

6. Laminat gemäß Anspruch 1 bis 5, **dadurch gekennzeichnet, dass** die Verschweißungspunkte des Laminats eine Fläche von unter 1 mm², vorzugsweise unter 0,5 mm² besitzen und in einem Abstand von 2-5 mm voneinander gitterförmig angeordnet sind.

7. Laminat gemäß Anspruch 1 bis 6, **dadurch gekennzeichnet, dass** anstelle einer durchgehenden elastischen Folie mehrere schmälere Folienstreifen zwischen den Vliesbahnen eingefügt sind.

8. Verfahren zur Herstellung von querelastischen Laminaten gemäß einem der Ansprüche 1 bis 7, **dadurch gekennzeichnet, dass** Vliesbahnen und Trägerfolie in einer Schweißstation über erhitzte Schweißeinrichtung tragende Walzen oder Ultraschallschweißanlagen spannungslos aufeinander gepresst und über gitterförmig angeordnete Schweißpunkte mit einer Fläche von unter 1 mm², vorzugsweise unter 0,5 mm² in einem Abstand von 2-5 mm miteinander verbunden werden.

9. Verfahren zur Herstellung von querelastischen Laminaten gemäß Anspruch 8, **dadurch gekennzeichnet, dass** die Schweißeinrichtungen so angeordnet sind, dass sie das Laminat von beiden Seiten bis fast zur Mitte der Trägerfolie durchdringen und durch kegelstumpfförmige Ausbildungen einen dünnen Folienrest im Ringspalt belassen.

10. Verfahren zur Herstellung der querelastischen Vliesbahnen zur Verwendung im Verfahren gemäß Anspruch 8 und 9, bestehend aus der Spinnextrusion geeigneter extrudierbarer Polyolefine, insbesondere Polypropylen, Anblasung der Spinnfäden mit temperierter Luft, Strecken, Crimpen und Schneiden zu Fasern, Bildung eines losen Stapelfaservlieses, Querorientierung von Fasern mittels einer Wirrwalze bis zu einem Faserverhältnis von querorientierten Fasern zu längsorientierten Fasern von 20-40 zu 80-60, Breitstreckung des noch nicht verfestigten Faserflors in einer Streckeinrichtung in mehreren Stufen und Verfestigung des Vlieses in einem Thermobondierverfahren durch Verschweißung über regelmäßig angeordnete Schweißpunkte mit einer Fläche von 0,8 mm² bis 0,2 mm² und einem Abstand von 1-5 mm, wobei der Pressflächenanteil unter 10 %, vorzugsweise 8 % der Gesamtfläche liegt.

11. Vliese gemäß Anspruch 10, **dadurch gekennzeichnet, dass** das Vlies ein Flächengewicht von 15-50 g pro m² aufweist, eine Reißfestigkeit von MD/CD von etwa 4 zu 1 und eine Dehnung MD/CD von 1 zu 2,5 aufweist.
